# EUROPÄISCHE PATENTSCHRIFT

(11) **EP 0 765 787 B1**
(45) Veröffentlichungstag und Bekanntmachung des Hinweises auf die Patenterteilung: **27.11.2002**
(21) Anmeldenummer: 96112773.5
(22) Anmeldetag: 08.08.1996
(51) Int. Cl.: B60T 8/00

(54) **Verfahren zur Verbesserung der Querstabilität bei Kraftfahrzeugen**
Procedure to improve the transveral stability of vehicles
Procédé pour améliorer la stabilité transversale chez les véhicules

(30) Priorität: 30.09.1995 DE 19536620
(43) Veröffentlichungstag der Anmeldung: 02.04.1997
(73) Patentinhaber: Bayerische Motoren Werke Aktiengesellschaft, 80788 München (DE)
(72) Erfinder: Sagan, Erich, 85716 Unterschleissheim (DE); Herb, Eugen, 80798 München (DE); Poguntke, Oliver, 81827 München (DE)

(56) Entgegenhaltungen:
- DE-A- 3 817 546
- DE-A- 4 010 332
- DE-A- 4 026 626
- DE-A- 4 200 997
- DE-A- 4 400 704

## Beschreibung

Die Erfindung bezieht sich auf ein Verfahren zur Verbesserung der Querstabilität bei Kraftfahrzeugen.

Beispielsweise aus der EP 0 392 165 B1 ist ein Verfahren zur Verbesserung der Querstabilität bei Kraftfahrzeugen bekannt, das insbesondere während einer Kurvenfahrt zur Wirkung kommt. Zur Verhinderung querdynamisch kritischer Fahrzustände werden in Abhängigkeit vom Lenkwinkel, von der Fahrzeuggeschwindigkeit und von querdynamischen Fahrzeuggrößen, wie der Gierwinkelgeschwindigkeit und der Querbeschleunigung des Fahrzeuges, Steuersignale für fahrzeugstabilisierende Bremsmoment- und/oder Antriebsmomenteingriffe abgegeben.

Bei dem aus der EP 0 392 165 B1 bekannten Verfahren wird jedoch nicht näher auf die Steuersignale für einen Bremsmoment- und/oder Antriebsmomenteneingriff eingegangen. Darüber hinaus unterscheidet das aus der EP 0 392 165 B1 bekannte Verfahren bei der Regelung querdynamischer Zustandsgrößen zur Einhaltung eines stabilen Fahrzustandes nicht zwischen einem Fahrzeug mit oder ohne Anhänger. Die Fahreigenschaften eines Fahrzeuges mit Anhänger unterscheiden sich jedoch von den Fahreigenschaften eines Fahrzeuges ohne Anhänger in dem Maße, dass eine Regelung nach dem aus der EP 0 392 165 B1 bekannten Verfahren nicht für beide Fahreigenschaften optimal ausgelegt werden kann.

In der DE 40 10 332 A1 ist ein Verfahren zur Lenkungs- und Bremsregelung beschrieben. Die Lenkung und Bremsung werden dabei koordiniert und entsprechend einer erfassten Giergeschwindigkeits- oder Querbeschleunigungsabweichung geregelt. Dadurch wird der Bremsweg gegenüber einem Bremsweg verkürzt, der durch eine Regelung allein des Bremsens für die Abweichungsverringerung erreicht wird.

Aus der DE 38 17 546 A1 ist ein Verfahren zur Erhöhung der Beherrschbarkeit eines gebremsten Fahrzeugs mit Bremsdruckregelung durch Änderung des Bremsdrucks an den Rädern bekannt. Dabei werden in zeitlichen Abständen in Phasen konstanten Bremsdrucks die Bremsdrücke an wenigstens einem Rad jeder Achse kurzzeitig geändert. Nach Verschwinden dieser Druckimpulse wird die Querbeschleunigungsänderung gegenüber dem Zustand vor dem Druckimpuls an jeder der Achsen bestimmt. Diese Werte der Querbeschleunigungsänderung stellen ein Maß für die Querstabilitätsreserve der einzelnen Achsen dar. Die Werte werden zur Beeinflussung des Schlupfes der Räder durch Bremsdruckveränderung im Sinne einer Erhöhung der Stabilität bei ausreichender Lenkbarkeitsreserve oder im Sinne einer Erhöhung der Lenkbarkeit bei ausreichender Stabilitätsreserve verwendet.

Es ist Aufgabe der Erfindung, ein Verfahren zur Verbesserung der Querstabilität bei Kraftfahrzeugen derart zu verbessern, dass die Querstabilität eines Kraftfahrzeuges auch im Anhängerbetrieb erhöht wird.

Diese Aufgabe wird durch die kennzeichnenden Merkmale des Patentanspruchs 1 gelöst.

Erfindungsgemäß werden, insbesondere durch Bremsmoment- und/oder Antriebsmomenteneingriffe, fahrzeugverzögernde Maßnahmen ergriffen, wenn die Amplitude einer querdynamischen, innerhalb eines vorgegebenen Frequenzbandes schwingenden Fahrzeuggröße einen vorgegebenen Grenzwert überschreitet, und wenn eine Lenkbewegungsgröße eine vorgegebene Schwelle nicht überschreitet.
Dieser Erfindung liegt die Erkenntnis zugrunde, dass querdynamische Fahrzeuggrößen, wie die Querbeschleunigung und die Gierwinkelgeschwindigkeit, ein typisches Schwingungsverhalten aufweisen, wenn sich das Fahrzeug mit Anhänger seiner Stabilitätsgrenze nähert. Vor Erreichen der Stabilitätsgrenze schwingen die querdynamischen Fahrzeuggrößen, wie insbesondere die Querbeschleunigung und die Gierwinkelgeschwindigkeit, mit einer Frequenz innerhalb eines Frequenzbandes von ca. 0,5 bis 1,1 Hz bei etwa gleichbleibender Amplitude um die Nulllage. Bei stärker werdender Instabilität steigen die Amplituden dieser querdynamischen Fahrzeuggrößen an. Ein vorgegebener Grenzwert für eine querdynamische Fahrzeuggröße, die innerhalb des sich als typisch erwiesenen, vorgegebenen Frequenzbandes schwingt, wird in etwa entsprechend einer Stabilitätsgrenze definiert. Hierbei wird davon ausgegangen, dass der Lenkraddrehwinkel näherungsweise konstant gehalten wird. Bei überschrittener Stabilitätsgrenze werden Maßnahmen zur Fahrzeugverzögerung, wie z. B. die Reduzierung des Drosselklappenöffnungswinkels zur Antriebsmomentenreduzierung und /oder die Einspeisung von Bremsdruck an den Kraftfahrzeugrädern zur Bremsmomenterhöhung, ergriffen. Durch dieses erfindungsgemäße Verfahren werden speziell bei Fahrzeugen im Anhängerbetrieb automatisch querdynamisch kritische Fahrsituationen vermieden, ohne an ein das erfindungsgemäße Verfahren ausführendes elektronisches Steuergerät die Information übermitteln zu müssen, ob ein Anhänger vorhanden ist oder nicht. Die fahrzeugverzögernden Maßnahmen werden nur dann ergriffen, wenn eine Lenkbewegungsgröße, wie beispielsweise der Lenkraddrehwinkel, eine vorgegebene Schwelle, z. B. einen vorgegebenen Lenkraddrehwinkeländerungsgrad, nicht überschreitet. Dies verhindert einen fahrzeugverzögernden Eingriff, wenn durch den Fahrer bewusst ein Fahrzeug- bzw. Anhängerschwingen, wie z. B. beim slalomartigen Ausweichen von Hindernissen, provoziert wird.

Eine vorteilhafte Ausgestaltung der Erfindung ist der Gegenstand des Patentanspruchs 2.
Erfindungsgemäß werden fahrzeugverzögernde Maßnahmen ergriffen, wenn die Amplitude einer querdynamischen, innerhalb des vorgegebenen Frequenzbandes schwingenden Fahrzeuggröße innerhalb einer vorgegebenen Zeit den vorgegebenen Grenzwert mehrmals überschreitet. Die Anzahl der vorgegebenen Grenzwertüberschreitungen einer Amplitude sowie die vorgegebene Zeit hierfür werden entsprechend dem vorgegebenen Frequenzband abgestimmt. Wird beispielsweise der Betrag der Amplitude, d. h. sowohl die Amplitude der negativen als auch die Amplitude der positiven Schwingung mit dem vorgegebenen Grenzwert verglichen, muss die vorgegebene Zeit für ein zweimaliges Überschreiten des Grenzwertes mindestens halb so groß wie die Periodendauer der höchsten Frequenz des vorgegebenen Frequenzbandes sein. Sollen die Amplituden von zwei Fahrzeuggrößen, wie z. B. der Gierwinkelgeschwindigkeit und der Querbeschleunigung, beachtet werden, muss die vorgegebene Zeit zusätzlich um die Phasenverschiebung der beiden schwingenden Fahrzeuggrößen erweitert werden. Diese erfindungsgemäße Ausgestaltung verhindert, dass fahrzeugverzögernde Maßnahmen bereits ergriffen werden, wenn nur eine kurzzeitige Schwingbewegung des Fahrzeuges im Anhängerbetrieb vorliegt. Hierdurch wird die Regelhäufigkeit im Zusammenhang mit den fahrzeugverzögernden Maßnahmen nur auf wirklich auftretende Instabilitäten begrenzt.

Eine weitere vorteilhafte Ausgestaltung der Erfindung ist der Gegenstand des Patentanspruchs 3.
Erfindungsgemäß werden fahrzeugverzögernde Maßnahmen erst dann ergriffen, wenn eine Zunahme der Amplitude zumindest einer querdynamischen schwingenden Fahrzeuggröße über der Zeit festgestellt wird. Auch diese Maßnahme führt zu einer Reduzierung der Regelhäufigkeit bezogen auf die fahrzeugverzögernden Maßnahmen.

In der Zeichnung ist ein Ausführungsbeispiel der Erfindung dargestellt. Es zeigt:

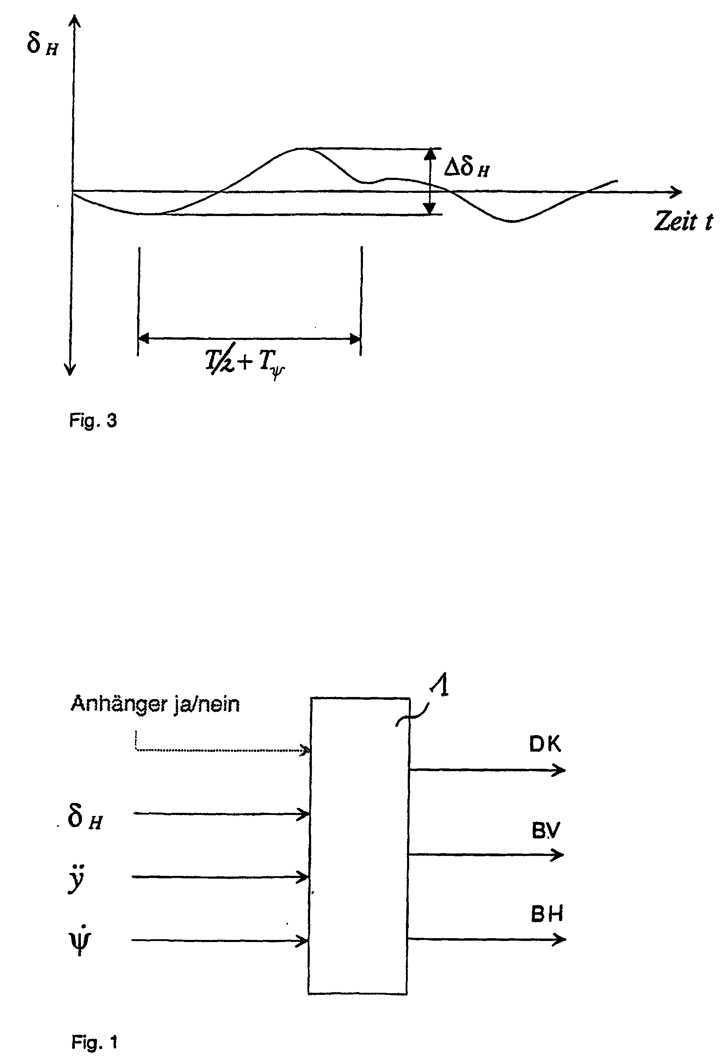

- Fig. 1: Mögliche Ein- und Ausgangssignale einer das erfindungsgemäße Verfahren durchführenden Fahrdynamik-Steuereinheit,
- Fig. 2: Typische Schwingverhalten der querdynamischen Fahrzeuggrößen Gierwinkelgeschwindigkeit und Querbeschleunigung
- Fig. 3: Einen möglichen Verlauf des Lenkraddrehwinkels über der Zeit und
- Fig. 4: Einen möglichen Logikablaufplan nach dem erfindungsgemäßen Verfahren.

Eine Fahrdynamik-Steuereinheit 1 erhält als Eingangssignale den Lenkraddrehwinkel δ_{H}, die Fahrzeug-Querschleunigung 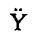 , die Fahrzeug-Gierwinkelgeschwindigkeit Ψ̇ sowie optional ein beliebiges Sensorsignal, das der Fahrdynamik-Steuereinheit 1 mitteilt, ob ein Anhänger vorhanden ist oder nicht (Anhänger ja/nein). Das erfindungsgemäße Verfahren in Abhängigkeit von den Eingangssignalen findet innerhalb der elektronischen Fahrdynamik-Steuereinheit 1 statt. Liegen die Bedingungen vor, nach denen fahrzeugverzögernde Maßnahmen ergriffen werden sollen, werden die fahrzeugverzögernden Maßnahmen über die Ausgangssignale der Fahrdynamik-Steuereinheit 1 vorgenommen. Beispielsweise sind die Ausgangssignale Befehle zur Reduzierung des Drosselklappenöffnungswinkels DK, und/oder Befehle zur Erhöhung des Bremsdruckes in den Bremsvorrichtungen BV der Vorderräder und in den Bremsvorrichtungen BH der Hinterräder.

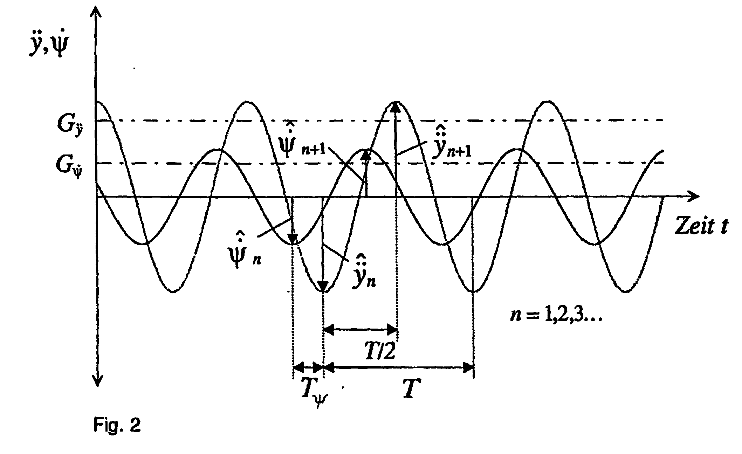

In Fig. 2 sind die zeitlichen Verläufe der Querbeschleunigung 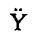 und der Gierwinkelgeschwindigkeit Ψ̇ über der Zeit bei überschrittener Stabilitätsgrenze dargestellt. Fahrzeugverzögernde Maßnahmen werden ergriffen, wenn entweder der Betrag der Amplitude 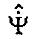 der Gierwinkelgeschwindigkeit Ψ̇ den Grenzwert G Ψ̇ oder die Amplitude 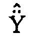 der Querbeschleunigung 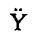 den Grenzwert G 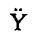 überschreitet. Alternativ kann auch das Überschreiten beider Grenzwerte G 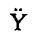 und G Ψ̇ als Voraussetzung für fahrzeugverzögernde Maßnahmen vorgegeben werden.

Vorzugsweise werden fahrzeugverzögernde Maßnahmen erst dann ergriffen, wenn innerhalb einer vorgegebenen Zeit T' mehrere aufeinanderfolgende Amplituden einer querdynamischen Fahrzeuggröße den ihr zugeordneten vorgegebenen Grenzwert überschreiten. Hierbei können entweder lediglich die Amplituden der positiven Schwingungen oder aber auch die Beträge aller Amplituden, also sowohl der negativen als auch der positiven Schwingungen, ausgewertet werden. Im dargestellten Beispiel nach Fig. 2 entspricht die vorgegebene Zeit T' mindestens der halben Periodendauer T/2 einer Schwingung der Querbeschleunigung 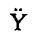 . Die vorgegebene Zeit T' = T/2 beginnt im dargestellten Beispiel bei dem Minimum einer Schwingung und endet im darauffolgenden Maximum der Schwingung. Liegen innerhalb dieser vorgegebenen Zeit T' die aufeinanderfolgenden Amplituden 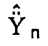 und 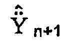 oberhalb des Grenzwertes G 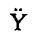 , können bereits fahrzeugverzögernde Maßnahmen eingeleitet werden. Alternativ kann jedoch die vorgegebene Zeit T' um die Zeitdauer T_{ψ} der Phasenverschiebung zwischen den Schwingungen der Querbeschleunigung 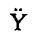 und der Gierwinkelgeschwindigkeit Ψ̇ erweitert werden. Innerhalb dieser erweiterten vorgegebenen Zeit T' = T/2 + T_{ψ} wird zusätzlich überprüft ob auch die Amplituden 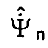 und 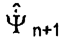 der Gierwinkelgeschwindigkeit Ψ̇ den vorgegebenen Grenzwert GΨ̇ überschreiten. Selbstverständlich kann die vorgegebene Zeit T' für die Auswertung einer Vielzahl von aufeinanderfolgenden Amplituden auch über die Zeitdauer T/2 bzw. T/2 + T ψ verlängert werden.

Alternativ oder zusätzlich zur Auswertung der Amplituden bezüglich der Überschreitung der Grenzwerte G 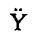 und GΨ̇ können auch die Amplitudenverhältnisse der aufeinanderfolgenden Amplituden einer querdynamischen schwingenden Fahrzeuggröße dahingehend überprüft werden, ob eine Zunahme der Amplituden über der Zeit t feststellbar ist. Somit werden fahrzeugverzögernde Maßnahmen dann ergriffen, wenn das Amplitudenverhältnis | 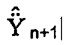 |/| 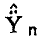 | der Querbeschleunigung 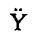 und/oder das Amplitudenverhältnis | 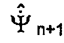 |/| 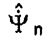 | der Gierwinkelgeschwindigkeit Ψ̇ eine vorgegebene Schwelle S überschreiten.

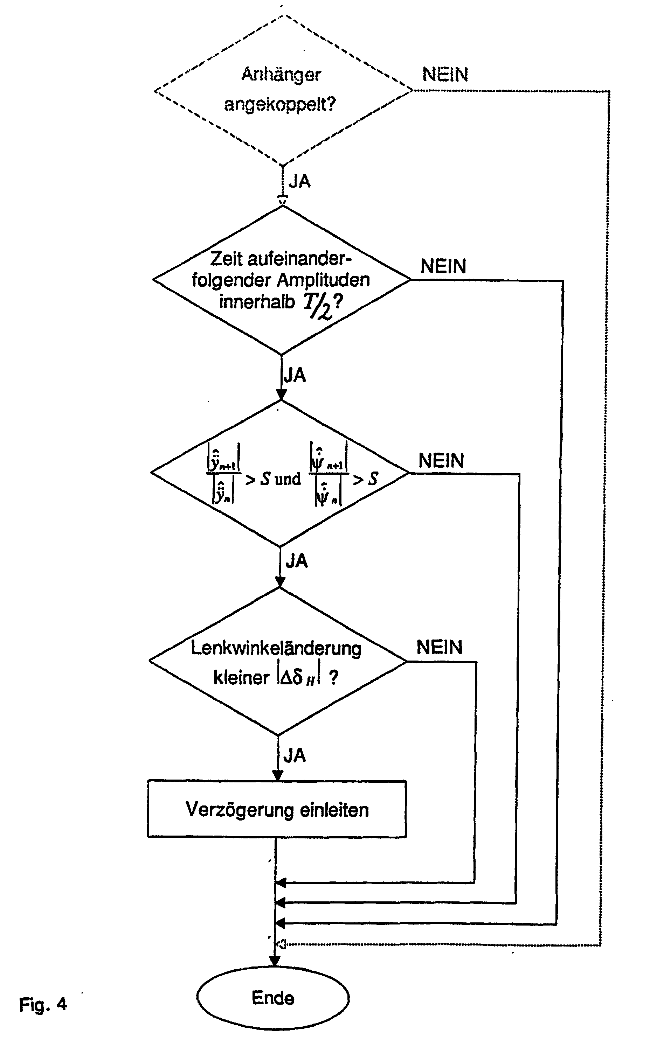

In Fig. 3 ist der zeitliche Verlauf des Lenkraddrehwinkels δ_{H} aufgetragen. Erfindungsgemäß werden fahrzeugverzögernde Maßnahmen nur dann ergriffen, wenn die Änderung des Lenkraddrehwinkels δ_{H} innerhalb der vorgegebenen Zeit T' (z. B. T' = T/2 + T_{ψ}), d. h. der Auswertezeit für die Amplituden und/oder Amplitudenverhältnisse, einen vorgegebenen Änderungsbetrag | Δδ_{H} | nicht überschreitet. Eine derartige Auswertung der Lenkbewegungsgröße δ_{H} ist erforderlich, um fahrzeugverzögernde Maßnahmen zu verhindern, wenn durch die Lenkbewegungsgröße ersichtlich ist, daß der Fahrer ein Fahrzeug- bzw. Anhängerschwingen, wie z. B. beim slalomartigen Ausweichen von Hindernissen, provoziert.

In Fig. 4 ist ein möglicher Logikablaufplan nach dem erfindungsgemäßen Verfahren dargestellt. Optional kann für den Beginn des Logikablaufplanes ein Signal ausgewertet werden, das die Information enthält, ob am Fahrzeug ein Anhänger angekoppelt ist oder nicht. Diese Information ist jedoch nicht zwingend notwendig, da ein Schwingen der querdynamischen Fahrzeuggrößen mit einer Frequenz im typischen Frequenzbereich, ca. 0,5 bis 1,1 Hz, zumindest in der Nähe der Stabilitätsgrenze auf einen Anhängerbetrieb schließen lässt. Daher wird zur Erkennung des Anhängerbetriebs in einem ersten Schritt überprüft, ob innerhalb der vorgegebenen Zeit T' = T/2 die Amplituden 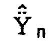 und 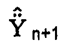 der Querbeschleunigung 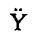 mit einem Wert oberhalb des Grenzwertes G 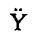 aufeinanderfolgen. Alternativ oder zusätzlich kann diese Abfrage auch auf die Gierwinkelgeschwindigkeit Ψ̇ angewendet werden.

Im zweiten Schritt wird überprüft, ob das Verhältnis einer Amplitude zur vorhergehenden Amplitude der gleichen Fahrzeuggröße, in diesem Fall sowohl für die Querbeschleunigung 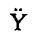 als auch für die Gierwinkelgeschwindigkeit Ψ̇, einen vorgegebenen Schwellwert S überschreitet (die Schwellwerte S für beide Fahrzeuggrößen können auch unterschiedlich sein).

Ist auch diese Bedingung erfüllt, wird in einem dritten Schritt überprüft, ob der Lenkraddrehwinkel δ_{H} sich innerhalb der Auswertezeit T' (= T/2 + T_{ψ} nicht mehr als um den Betrag |Δδ_{H}| ändert. Ist auch diese Bedingung erfüllt, werden die fahrzeugverzögernden Maßnahmen eingeleitet.

Durch dieses erfindungsgemäße Ausführungsbeispiel werden querdynamisch kritische Fahrzustände unabhängig von der gefahrenen Geschwindigkeit vermieden.

## Patentansprüche

1. Verfahren zur Verbesserung der Querstabilität bei Kraftfahrzeugen, **dadurch gekennzeichnet, dass** fahrzeugverzögernde Maßnahmen ergriffen werden, wenn die Amplitude ( 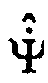 , 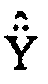 ) einer querdynamischen, innerhalb eines vorgegebenen Frequenzbandes schwingenden Fahrzeuggröße (Ψ̇, 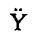 ) einen vorgegebenen Grenzwert (GΨ̇, G 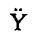 ) überschreitet und wenn eine Lenkbewegungsgröße (δ_{H}) eine vorgegebene Schwelle (Δδ_{H}) nicht überschreitet.

2. Verfahren nach Patentanspruch 1, **dadurch gekennzeichnet, dass** fahrzeugverzögernde Maßnahmen ergriffen werden, wenn die Amplitude ( 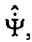 , 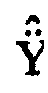 ) einen vorgegebenen Grenzwert (GΨ̇, G 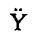 ) innerhalb einer vorgegebenen Zeit (T') mehrmals überschreitet.

3. Verfahren nach Patentanspruch 1 oder 2, **dadurch gekennzeichnet, dass** fahrzeugverzögernde Maßnahmen ergriffen werden, wenn die Amplitude ( 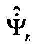 , 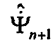 ; 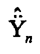 , 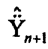 ) über der Zeit (t) zunimmt.

## Claims

1. A method for improving the transverse stability of motor vehicles, **characterised in that** vehicle retarding measures are introduced, when the amplitude ( 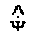 , 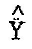 ) of a transverse dynamic vehicle value (Ψ̇, 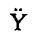 ), oscillating within a predetermined frequency band, exceeds a predetermined limit value (GΨ̇, G 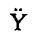 ) and if a steering wheel movement (δ_{H}) does not exceed a predetermined limit (Δδ_{H}).

2. A method according to Claim 1, **characterised in that** vehicle retarding measures are introduced, when the amplitude ( 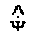 , 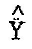 ), exceeds a predetermined limit value (GΨ̇, G 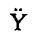 ) several times within a predetermined time (T'),

3. A method according to Claim 1 or Claim 2, **characterised in that** vehicle retarding measures are introduced, when the amplitude ( 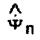 , 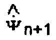 ; 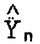 , 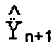 ) increases over the time (t).

## Revendications

1. Procédé pour améliorer la stabilité transversale de véhicules,
**caractérisé en ce que**
on prend des mesures de décélération du véhicule si les amplitudes ( 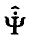 , 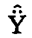 ) d'une grandeur du véhicule (Ψ̇, 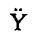 ) oscillante dans une bande de fréquence prédéterminée, à dynamique transversale, dépasse une valeur limite prédéterminée (G Ψ̇, G 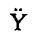 ) et si une grandeur de mouvement de direction (δ_{H}) ne dépasse pas un seuil prédéterminé (|Δδ_{H}|).

2. Procédé selon la revendication 1,
**caractérisé en ce que**
des manoeuvres dilatoires sont prises si l'amplitude ( 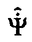 , 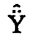 ) dépassent plusieurs fois une valeur limite prédéterminée (G Ψ̇, G 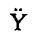 ) dans une durée prédéterminée (T').

3. Procédé selon la revendication 1 ou 2,
**caractérisé en ce que**
des mesures de décélération du véhicule sont prises si l'amplitude ( 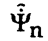 , 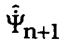 , 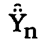 , 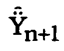 ) augmente en fonction du temps t.
